# EUROPEAN PATENT APPLICATION

(11) **EP 1 035 747 A1**
(43) Date of publication of application: **13.09.2000**
(21) Application number: 99107676.1
(22) Date of filing: 16.04.1999
(51) Int. Cl.: H04Q 7/38, H04Q 7/30

(54) **Base station for protecting a predetermined area by means of a separate protection system**

(30) Priority: 12.03.1999 WO PCT/EP99/01645
(71) Applicant: Sony International (Europe) GmbH, 50829 Köln (DE)
(72) Inventor: Winkler, Gregor, c/o Sony International (Europe), 85609 Aschheim (DE); Chummun, Ferial, c/o Sony International (Europe), 85609 Aschheim (DE); Ott, Stefan, c/o Sony International (Europe) GmbH, 85609 Aschheim (DE)
(74) Representative: Körber, Martin, Dipl.-Phys.

(57) **Abstract**

The present invention relates to a base station (200) of a wireless protection system for protecting a predefined area for mobile terminals of a wireless telecommunication system and to a method for protecting a predefined area from disturbing use of mobile terminals. The base station (200) of the present invention comprises generating means (201) for generating protection signals for changing a mode of the mobile terminals of the wireless telecommunication system receiving said protection signals for protecting a predefined area from disturbing usage of the mobile terminals, and transmitting means (203) for transmitting the protection signals generated in the generating means (201) on the basis of a wireless protection system different from said wireless telecommunication system within the predefined area so that protection signals are received by mobile terminals within the predefined area to change a mode thereof and thus to protect the predefined area. Since the wireless protection system for transmitting the protection signals and the wireless telecommunication system used by the mobile terminals are different, undesirable or dangerous interference to other services or devices in the area can be inhibited while the mobile terminals still remain remote controllable.

## Description

The present invention relates to a mobile terminal for a wireless cellular telecommunication system for protecting a predetermined area from disturbing usage of this mobile terminal and to a method for protecting a predetermined area from disturbing usage of mobile terminals of a wireless cellular telecommunication system.

In many areas the use of mobile terminals of wireless telecommunication systems is regarded as a nuisance for other people, like in restaurants or in the opera, or even dangerous in places like hospitals or airplanes. In the first case particularly audible signals output from mobile terminals are disturbing other people or the spectacle being given. In the second case, the use of mobile terminals, particularly the transmission of high frequency electromagnetic waves, can disturb other electronic devices or the like by interfering with their circuitry what can lead to severe incidents. It is therefore very important to provide a way to protect predetermined areas from a disturbing usage of mobile terminals within these areas. Particularly, the protection of a predetermined area should not depend on the user's will, e. g. on a user's input of information to the mobile terminal.

EP 0 891 110 A1 discloses a method and a system for preventing a mobile terminal from causing disturbance within a predetermined area, e. g. inside a plane or inside of hospitals. Particularly, the disclosed method comprises the steps of transmitting a deactivation signal from a base station to a mobile terminal and deactivating a use of the output of the mobile terminal in response to the deactivation signal. Thereby, the transmission output is deactivated. The base terminal can either be an ordinary base station or a base station specifically designed for mainly transmitting the deactivation signal. Although EP 0 891 110 A1 describes that the base station could be a specifically designed base station, it is not disclosed how the deactivation signals could be implemented and transmitted in an ordinary telecommunication system or how a mobile terminal can be implemented, to protect such an area from disturbing usage of mobile phones of different mobile networks.

The object of the present invention is therefore to provide a base station of a wireless protection system for protecting a predetermined area for mobile terminals of a wireless telecommunication system and a method for protecting a predetermined area or predefined area from disturbing use of mobile terminals, which protect said predetermined area in a simple and effective way.

The above object is achieved by a base station of a wireless protection system for protecting a predetermined area for mobile terminals of a wireless telecommunication system, said wireless protection system being different from said wireless telecommunication system, with a generating means for generating protection signals for changing a mode of mobile terminals of said wireless telecommunication system receiving said protection signals for protecting a predetermined area from disturbing use of mobile terminals, transmitting means for transmitting said protection signals generated in said generating means on the basis of said wireless protection system within said predetermined area so that protection signals are received by mobile terminals within said predetermined area to change a mode thereof and thus to protect the predetermined area.

The above object is further achieved by a method for protecting a predetermined area from disturbing use of mobile terminals of a wireless telecommunication system by means of a wireless protection system different from said wireless telecommunication system, comprising the steps of generating protection signals for changing a mode of mobile terminals of said wireless telecommunication system receiving said protection signals for protecting a predefined area from disturbing use of mobile terminals, transmitting said protection signals on the basis of the wireless protection system within the predefined areas so that protection signals are received by mobile terminals within said predefined area to change a mode thereof and thus to protect the predefined area.

Separating the function of detection protection signals from performing functions for the wireless telecommunication system allows to completely disable function blocks for the wireless telecommunication system, thereby eliminating any associated power consumption and undesirable or dangerous interference to other services or devices in the area to be protected. Nevertheless, each mobile terminal can be switched back into normal mode automatically after leaving the protected area. The shape and size of the area protected by such protection method can therefore be determined and chosen independently from the conditions that apply to the wireless telecommunication system. This can be achieved by choosing the transmission method for said protection signals so that their range is determined by the propagation and obstacle penetration characteristics of said protection signals and / or by applying navigation methods to determine the geographic position of the mobile terminal such as triangulation or path delay information carried by or determined from said protection signal.

Using a short wavelength (typically decimeters or less) for said protection signal allows to plan / predetermine the range and intended absorption in obstacles to limit the range. Natural propagation of RF waves causes a path attenuation which is proportional to 4π/λ*d², where d is the distance between transmitter and receiver and λ is the wavelength used. Typical home or office environments create even larger wave attenuation typically proportional to 4π/λ*d³ above a distance of about 10 meters.

Advantageously, the transmitting means regularly broadcast said protection signals. This ensures, that the predefined area around the protection signal transmitter or the base station according to the present invention is protected against disturbing use of the mobile terminals just as long as the protection signal is recognized by the mobile terminals.

Advantageously, the transmitting means of the base station according to the present invention transmits only a single message as protection signal. This ensures, that predefined areas, which cannot be equipped, e. g. for interference reasons, with continuously transmitting base stations, e. g. airplanes, can be protected against the disturbing use of such mobile terminals. This further ensures that predefined areas that can only be equipped with base stations having a low duty cycle, which are e. g. power supplied by batteries, rechargeable voltage sources or solar powered sources, can be protected against the disturbing use of mobile terminals. Further, this ensures that only mobile terminals being in the predefined area at the time of transmission of the protection signals and recognizing the protection signals will change their mode into the protection mode.

Advantageously, the protection signals cause that at least a high frequency portion of the mobile terminals receiving the protection signals is switched off. This will eliminate any associated power consumption and undesirable or dangerous interference to other services or devices in the predefined area to be protected.

Further advantageously, the protection signals cause a mode change of the mobile terminals so that audible signals of the mobile terminals are suppressed and replaced by visual or other non-audible signals. This will avoid any conceivable nuisance to persons not concerned with the mobile terminal and ensure that the mobile terminal will retain its normal functionality for the user concerned.

Advantageously, the transmitting means of the base station according to the present invention transmits said protection signals as electromagnetic signals in a frequency of the radio frequency range different from the frequency range of the wireless telecommunication system of the mobile terminals. In this case, the frequency can be in the GHz range, whereby the wave length is less than 0.3 meters.

Further advantageously, the transmitting means of the base station according to the present invention transmits the protection signals as infrared signals. This has the advantage that the transmitting means can be implemented in a very cost-effective way. Further, it is ensured that the transmitting means will not cause or suffer from any electromagnetic or electrostatic interference with other electronic devices. Further, the range of the predefined area to be protected will be substantially determined by line-of-sight restrictions.

Advantageously, the transmitting means of the base station of the present invention has a transmission power to transmit the protection signals in a range of up to 50 meters. This ensures, that the transmission power consumption can be fulfilled by batteries, rechargeable or solar power cells. Also, the transmission power will cause only very small and thus negligible interference.

Advantageously, a movement detection means is provided in the base station of the present invention for detecting movements of the base station, whereby the movement detection means causes a switching off of the base station upon detection of a movement. This will prevent any unauthorized person from making fraudulent use of the base stations of the present invention. Misuse of the base stations can cause confusion and unacceptable loss of revenues for parties concerned with operational use of wireless telecommunication systems. This also permits the mobile terminals within the predefined area to switch back to normal operating mode and submit emergency calls, e. g. in the case of an incident that caused the base station to move.

Further advantageously, an input means is provided in the base station of the present invention for inputting a security code which has to be input to switch on the base station. This will also prevent any unauthorized person from making fraudulent use of the base stations of the present invention.

Further advantageously, the generating means of the base station of the present invention at time information to the protection signals for indicating a time period during which the change mode of a mobile terminal is to be maintained. This ensures that the predefined area around the base station remains protected for an amount of time which is determined by the base station against the disturbing use of the mobile terminals even in the case that the protection signals are not continuously transmitted by the base station or continuously recognized by the protection signal detector in the mobile terminals. The transmitted time information could e. g. indicate the expected flight duration plus an optional safety margin. This further ensures that predefined areas which cannot be equipped with continuously transmitting base stations, as e. g. airplanes, can be protected against the disturbing use of said mobile terminals if the user of the mobile terminal has previously passed an predefined area protected by a base station according to the present invention.

Further advantageously, the generating means of the base station according to the present invention adds address information to the protection signal for addressing only one or more mobile terminals with the protection signal to change the mode of the one or more addressed mobile terminals only. This ensures that a privileged group of mobile terminals can be operated normally in the protected area, which might be important for security, safety or service personnel. This also ensures that a group of mobile terminals can be operated normally even in the protected area. This can be the case if the mobile terminals technically operate in a way which is not causing any objectionable interference in the protected area. This further ensures that individual mobile terminals causing substantial interference in the area concerned can be switched off individually.

Advantageously, a communication means for communicating with other base stations for the wireless protection system is provided in the base stations according to the present invention for localising the position of a mobile terminal in the predefined area. This allows the use of location information to determine the protected area more precisely as by observing the protection signal strength in the mobile terminal. This might be particularly advantageous in cases in which certain small and very precisely defined locations have to be particularly protected. In this case, the localisation can be performed by triangulation calculations. This allows a very precise determination of the position of mobile terminals and the determination of an arbitrary shape of the predetermined area.

The present invention will be explained in more detail in the following description by means of preferred embodiments relating to the enclosed drawings, in which
figure 1 shows a typical application scenario employing the present invention,
figure 2 shows a base station for transmitting protection signals according to the present invention, and
figure 3 shows a mobile terminal for a wireless telecommunication system and for detecting protection signals of a wireless protection system according to the present invention.

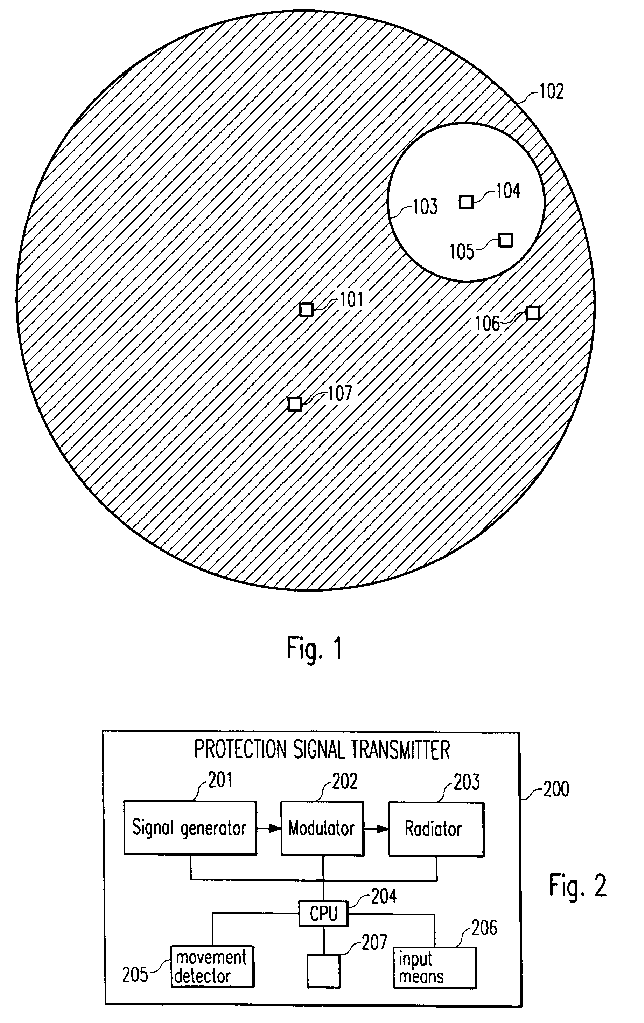

Figure 1 shows a base station 101 of a normal telecommunication system having a transmitting and receiving range indicated by the circle 102. The base station 101 of the wireless telecommunication system transmits and receives signals to and from mobile terminals of the wireless telecommunication system within the range limited by the circle 102. E. g. the mobile terminals 105, 106 and 107 located within the range 102 are able to communicate with the base station 101 on the basis of the wireless telecommunication system, e. g. the GSM system. Within the range of the base station 101, a protection area is located, the range of which is indicated by the circle 103. This protection area 103 can e. g. be the area of a hospital or the like. The mobile terminal 105 is located within the range of the protection signal transmitter 104, which transmits protection signals of a wireless protection system different from the wireless telecommunication system used by the base station 101. The mobile terminal 105 is a mobile terminal according to the present invention and is therefore able to receive the protection signals from the protection signal transmitter 104. Upon detecting such a protection signal from the protection signal transmitter 104, the normal terminal 105 switches itself into a protection mode depending on the detected protection signal so that the protection area, i. e. the transmission range 103 of the protection signal transmitter 104 is protected from disturbing usage of the mobile terminal.

Figure 2 shows a protection signal transmitter or a base station for transmitting protection signals 200 according to the present invention. The protection signal transmitter 200 comprises a generating means 201 for generating the protection signals. The generated protection signals are supplied to a modulating means 202, which modulates the protection signals and supplies the modulated protection signals to a radiating or transmitting means 203, which transmits the protection signals on the basis of the wireless protection system within the range of the protection area, as e. g. the range 103 shown in figure 1.

The transmitting means 203 of the base station 200 regularly broadcasts the protection signals. The generating means 201 can generate the protection signals as a single message, respectively. The transmitting means 203 of the base station 200 can either transmit the protection signals as electromagnetic signals in a frequency of the radio frequency range different from the frequency range of the wireless telecommunication system of the mobile terminals within the predefined area. Thereby, the frequency can be in the GHz range. Alternatively, the transmitting means 203 can transmit the protection signals as infrared signals. In any case, the transmission means 203 advantageously has a transmission power to transmit the protection signals in a range of up to 50 meters.

The base stations shown in figure 2 further comprises a movement detection means 205 for detecting movements of the base station 200. If e. g. the base station 200 is inadvertedly moved or stolen, the movement detection means detects the movement and causes a switching off of the base station 200 by supplying a movement detection signal to a central processing unit 204, which causes the switching off of the base station 200. Thus, fraudulent use of the base station can be prohibited. Alternatively or additionally, the base station 200 may comprise an input means 206, as e. g. a keyboard, for inputting a security code which has to be input to switch on the base station 200. If e. g. the base station 200 is stolen, the movement detector 205 detects the movement and switches off the base station. Then, to switch the base station 200 back on again, a security code has to be input by means of the input means 206.

The generating means 201 can add time information to the protection signals for indicating a time period during which the changed mode of a mobile terminal receiving the protection signals is to be maintained. Further or alternatively, the generating means 201 can add address information to the protection signals for addressing only one or more mobile terminals.

Further, the base station 200 may comprise a communication means 207 for communicating with other base stations of the wireless protection system for localising the position of a mobile terminal within the predefined area. This localisation can e. g. be performed by triangulation calculations performed in the central processing unit 204.

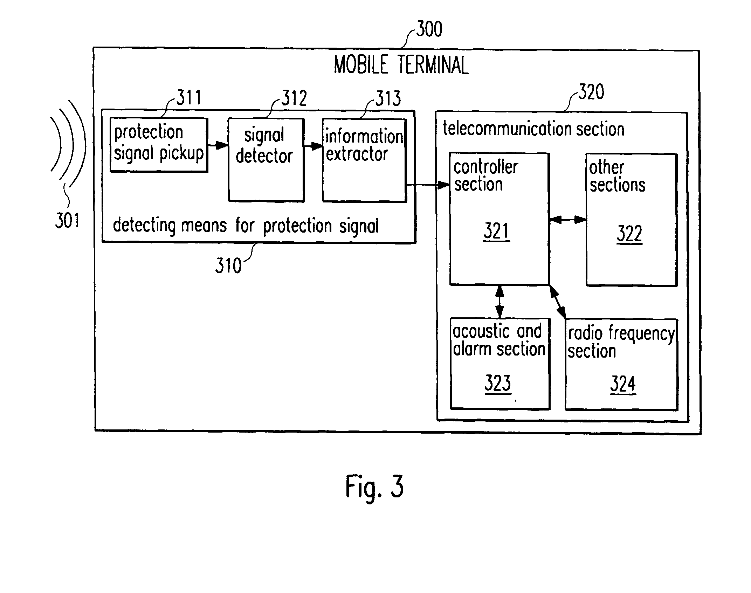

Figure 3 shows a mobile terminal 300 for a wireless telecommunication system according to the present invention. The mobile terminal 300 comprises a protection signal detecting section 310 for detecting protection signals, as e. g. transmitted from a protection signal transmitter 200 shown in figure 2, and changing the mode of the mobile terminal 300 into a protection mode, and further a telecommunication section 320 for communicating with the normal base station, as e. g. the base station 101 shown in figure 1, of a wireless telecommunication system different from the wireless protection system.

The protection signal detecting means 310 of the mobile terminal 300 comprises a pickup means 311 for picking up protection signals 301, i. e. the radiated protection signal energy, and supplies the picked up protection signal to a protection signal detecting means 312 for detecting and demodulating the picked up protection signals. The demodulated protection signals are supplied to an information extracting means 313, which recognizes relevant protection signals for the respective mobile terminal, e. g. the mobile terminal 300, and supplies the extracted information to a controlling section 321 of the telecommunication section 320. The controlling section 321 controls the changement of the mode of the mobile terminal 300 into the protection mode according to the present invention. Thereby, the controlling section 321 controls an acoustic and alarm section 323 to output a warning signal to the user that a mode changement into a protection mode is performed. Further, the controlling section 321 controls a radio frequency section 324 for switching off at least the radio frequency parts of the mobile terminal 300. The telecommunication section 320 of the mobile terminal 300 further comprises other sections 322 for operating the mobile terminal 300 in the wireless telecommunication system, i. e. for communicating data e. g. with a normal base station of the telecommunication system within non-protected areas.

The controlling section 321 can maintain the protection mode as long as the detecting means 310 detects protection signals of the wireless protection system. Further, the controlling section 321 can change the mode of the mobile terminal 300 back from the protection mode to the original mode upon determining that a predetermined time elapsed since the last reception of a protection signal by the pick-up means 311.

Alternatively, the controlling section 321 can maintain the protection mode of the mobile terminal 300 until a time period received as time information with the protection signal has expired, whereby the mobile terminal 300 is reset to the original mode thereafter. This implies, that the protection signal transmitter, as e. g. the protection signal transmitter 200, further generates a timing signal which is transmitted with the protection signals.

The controlling section 321, upon detection of a protection signal by the detecting means 310, controls the radio frequency section 324 to switch off at least the high frequency portion of the telecommunication section 320 of the mobile terminal 300. Thereby, in the protection mode only portions of the mobile terminal 300 relating to the wireless telecommunication system but not portions of the mobile terminal 300 relating to the wireless protection system, e. g. the detecting means 310, are switched off.

Depending on the protection level to be achieved, which might be different for different areas, e. g. hospitals, airplanes or restaurants, the protection mode of the mobile terminal 300 may also be a silence mode in which the volume of audible output signals of the mobile terminal 300 is lowered or in which the audible output signals are completely suppressed. In this case, the controlling section 321 controls the acoustic and alarm section 323 to suppress or at least lower audio output signals of the mobile terminal 300. Further, the controlling section 321 may in this case replace the suppressed audible output signals by visual or other non-audible signals.

In sensible areas, e. g. hospitals, airplanes, nuclear plants etc., the base station or protection signal transmitter 200 of the present invention, as e. g. shown in figure 2, can further comprise security means for preventing any mishandling and misuse. E. g., the protection signal transmitter 200 can comprise a movement detection means for detecting movements of the protection signal transmitter 200, whereby the movement detection means causes a switching off of the protection signal transmitter upon detection of a movement. In this case, protection against theft and misuse is ensured. Further, the protection signal transmitter 200 might comprise an input means for inputting a security code to be input to switch on the protection signal transmitter 200.

In less sensitive areas, as e. g. restaurants or theaters, in which the protection signal transmitter 200 transmits protection signals for switching off or at least lowering audible signals output from mobile terminals within the predetermined area, might also comprise security means for preventing any mishandling and misuse as explained above.

In the following, possible technical implementations of the wireless telecommunication system as well as for the wireless protection system according to the present invention are described, whereby in any case different systems have to be used for the wireless telecommunication system and the wireless protection system according to the present invention, so that interferences between the two systems are avoided. The wireless telecommunication system and the wireless protection system can be based on the following principles:

Time Division Multiple Access (TDMA). Example implementations of cellular systems based on this principle are the ETSI Standard GSM, as described in Chapters 3-11 of "An Introduction to GSM" from Redl, Weber, Oliphant, Artech House, 1995; The Standards NADC, IS-54, IS-136, as described in Chapter 12 of this book; and RCR/ARIB PDC. Examples of cordless systems based on this principle are standardized as ETSI DECT, RCR/ARIB PHS, EIA PWT, and Bluetooth.

CDMA (Code Division Multiple Access), e.g. EIA/TIA IS-95, EIA/TIA IS-95A, EIA/TIA IS-95B, as described in Chapter 13 of "An Introduction to GSM" as mentioned above.

TD-CDMA (Time Division-Code Division Multiple Access).

Analog continuous-time transmission methods such as AM, FM, SSB.

Compressed time / time-slot versions of systems based on analog transmission methods.

Broadcast systems (FM, AM, COFDM, e.g. DAB).

Pager systems (POCSAG).

Optical/Infrared systems.

Acoustic/Ultrasonic systems.

Hereafter some advantageous types of implementations of transmission methods for the wireless protection system of the present invention are considered.

It is suggested to use a short wavelength (decimeters and less) to determine a short range of protection around a station, which is transmitting protection signals of a wireless protection system. Absorption in obstacles can be planned as desired. Natural propagation of RF waves causes a path attenuation which is proportional to 4π/λ*d², where d is the distance between transmitter and receiver and λ is the wavelength used. Typical home or office environments create even larger wave attenuation typically proportional to 4π/λ*d³ above a distance of about 10 meters.

Different possible implementations of the protection system have each specific characteristics, advantages and disadvantages.

Radio frequency systems, i.e. systems, which use radio frequency protection signals, yield a good coverage range per transmitted power. A long range is therefore possible, depending on selected transmit power, receiver sensitivity, wavelength, and anticipated interference. An omni-directional radiator can be implemented easily in the protection signal transmitter, resulting in almost circular or spherical ranges. Radio frequency waves pass through some obstacles and encounter inflection, depending on the selected wavelength, therefore a line of sight between transmitter and receiver is usually not required. As an example, the protection system could be implemented using Bluetooth as the basic standard.

Optical systems typically have a short range per transmitted power. Radiators are usually directional such as in the case of an LED. Some gain in range or transmit power reduction can be achieved by concentration of radiation. Omni-directional radiators are big and heavy. Scattering can remove the restrictions of directional radiators at the expense of transmit power. Optical systems can be implemented in a cost efficient way. Particularly transmitters can be very cheap. System approval can be obtained easily. Radiation does not pass through most of the common obstacles such as walls or furniture. That could be a desired feature. A line of sight path between transmitter and receiver is usually required. Optical systems generate few interference to other devices or services. Few health considerations arise from their use.
As an example, the protection system could be implemented using infrared technology e.g. from home appliance remote controls as the basic standard.

Acoustic systems typically have a short to medium range. The required transmit power per range obtained is rather high. Typical systems have a directional radiator such as a piezoelectric speaker. Acoustic waves are scattered, inflected and reflected by most of the usual objects in home or office environments, therefore a line of sight between transmitter and receiver is usually not required. Radiation does not pass through most of the common obstacles such as walls, windows, furniture. System approval can be obtained easily. Acoustic systems generate few interference to other devices or services and only few health considerations arise from their use.
As an example, the protection system could be implemented using ultrasonic technology e.g. from home appliance remote controls as the basic standard.

As a preferred example, the protection system could be implemented using radio frequency technology based on "Bluetooth".
Bluetooth is a standard which is currently still under development. Bluetooth supports wireless ad-hoc voice and data connectivity. Bluetooth is a TDMA/TDD/FHSS system that operates in the unlicensed 2.4GHz ISM band, frequencies for its operation have been allocated worldwide. A range of 10 meters or even 100 meters (using higher transmit power) can be achieved. No line-of-sight is necessary for a successful communication.
Due to features like worldwide ad-hoc connectivity, low power, small size and ease of integration, Bluetooth is very well suited to the requirements of a protection system according to this invention. A Bluetooth subsystem can be implemented on a single silicon chip. A Bluetooth subsystem can also be integrated into existing chip designs.

## Claims

1. Base station (200) of a wireless protection system for protecting a predefined area from mobile terminals of a wireless telecommunication system, said wireless protection system being different from said wireless telecommunication system, with generating means (201) for generating protection signals for changing a mode of mobile terminals of said wireless telecommunication system receiving said protection signals for protecting a predefined area from disturbing usage of mobile terminals, transmitting means (203) for transmitting said protection signals generated in said generating means (201) on the basis of said wireless protection system within said predefined area so that said protection signals are received by mobile terminals within said predefined area to change a mode thereof and thus to protect the predefined area.

2. Base station (200) for a wireless protection system according to claim 1, **characterized in,**
that said transmitting means (203) regularly broadcasts said protection signals.

3. Base station (200) for a wireless protection system according to claim 1 or 2, **characterized in,**
that said transmitting means (203) transmits only a single message as protection signal.

4. Base station (200) for a wireless protection system according to claim 1, 2 or 3, **characterized in,**
that said protection signals cause that at least a high frequency portion of said mobile terminals receiving said protection signals is switched off.

5. Base station (200) for a wireless protection system according to claim 1, 2 or 3, **characterized in,**
that said protection signals cause a mode change of said mobile terminals so that acoustic signals of said mobile terminals are suppressed and replaced by visual or other non acoustic signals.

6. Base station (200) for a wireless protection system according to one of the claims 1 to 5,
**characterized in,**
that said transmitting means (203) transmits said protection signals as electromagnetic signals in a frequency of the radio frequency range different from the frequency range of the wireless telecommunication system of the mobile terminals.

7. Base station (200) for a wireless protection system according to claim 6, **characterized in,**
that said frequency is in the GHZ range.

8. Base station (200) for a wireless protection system according to one of the claims 1 to 5,
**characterized in,**
that said transmitting means (203) transmits said protection signals as infrared signals.

9. Base station (200) for a wireless protection system according to one of the claims 1 to 8,
**characterized in,**
that said transmitting means (203) has a transmission power to transmit said protection signals in a range of up to 50 m.

10. Base station (200) for a wireless protection system according to one of the claims 1 to 9,
**characterized in,**
that a movement detection means (205) is provided for detecting movements of said base station, whereby said movement detection means causes a switching off of said base station upon detection of a movement.

11. Base station (200) for a wireless protection system according to one of the claims 1 to 10,
**characterized in,**
that an input means (206) is provided for inputting a security code which has to be input to switch on the base station.

12. Base station (200) for a wireless protection system according to one of the claims 1 to 11,
**characterized in,**
that said generating means (201) adds time information to said protection signals for indicating a time period during which the changed mode of a mobile terminal is to be maintained.

13. Base station (200) for a wireless protection system according to one of the claims 1 to 12,
**characterized in,**
that said generating means (201) adds address information to said protection signal for addressing only one or more mobile terminals with said protection signal to change the mode of the one or more addressed mobile terminals only.

14. Base station (200) for a wireless protection system according to one of the claims 1 to 13,
**characterized in,**
that a communication means (207) for communicating with other base stations for the wireless protection system is provided for localizing the position of a mobile terminal in the predefined area.

15. Base station (200) for a wireless protection system according to claim 14,
**characterized in,**
that the localization is performed by triangulation.

16. Method for protecting a predefined area from disturbing use of mobile terminals of a wireless telecommunication system by means of a wireless protection system different from said wireless telecommunication system,
comprising the steps of
generating protection signals for changing a mode of mobile terminals of said wireless telecommunication system receiving said protection signals for protecting a predefined area from disturbing use of mobile terminals,
transmitting said protection signals on the basis of said wireless protection system within said predefined area so that said protection signals are received by mobile terminals within said predefined area to change a mode thereof and thus to protect the predefined area.

17. Method for protecting a predefined area from mobile terminals of a wireless telecommunication system according to claim 16,
**characterized in,**
that said protection signals are regularly broadcast.

18. Method for protecting a predefined area from mobile terminals of a wireless telecommunication system according to claim 16 or 17,
**characterized in,**
that only a single message is transmit as protection signal.

19. Method for protecting a predefined area from mobile terminals of a wireless telecommunication system according to claim 16, 17 or 18,
**characterized in,**
that said protection signals cause that at least a high frequency portion of said mobile stations receiving said protection signals is switched off.

20. Method for protecting a predefined area from mobile terminals of a wireless telecommunication system according to claim 16, 17 or 18,
**characterized in,**
that said protection signals cause that a mode of said mobile terminals receiving said protection signals is changed so that acoustic signals of said mobile terminals are suppressed and replaced by visual or other non acoustic signals.

21. Method for protecting a predefined area from mobile terminals of a wireless telecommunication system according to one of the claims 16 to 20,
**characterized in,**
that said protection signals are transmit as electromagnetic signals in a frequency of the radio frequency range different from the frequency range of the wireless telecommunication system of the mobile terminals.

22. Method for protecting a predefined area from mobile terminals of a wireless telecommunication system according to claim 21,
**characterized in,**
that said frequency is in the GHZ range.

23. Method for protecting a predefined area from mobile terminals of a wireless telecommunication system according to one of the claims 16 to 20,
**characterized in,**
that said protection signals are transmit as infrared signals.

24. Method for protecting a predefined area from mobile terminals of a wireless telecommunication system according to one of the claims 16 to 23,
**characterized in,**
that said protection signals are transmit in a range of up to 50 m.

25. Method for protecting a predefined area from mobile terminals of a wireless telecommunication system according to one of the claims 16 to 24,
**characterized in,**
that time information is added to said protection signals for indicating a time period during which the changed mode of a mobile station is to be maintained.

26. Method for protecting a predefined area from mobile terminals of a wireless telecommunication system according to one of the claims 16 to 25,
**characterized in,**
that address information is added to said protection signal for addressing only one or more mobile stations with said protection signal to change the mode of the one or more addressed mobile terminals only.

27. Method for protecting a predefined area from mobile terminals of a wireless telecommunication system according to one of the claims 16 to 26,
**characterized in,**
that the position of a mobile terminal in the predefined area is localized by triangulation.
